# EUROPEAN PATENT SPECIFICATION

(11) **EP 2 804 752 B1**
(45) Date of publication and mention of the grant of the patent: **10.08.2016**
(21) Application number: 13703518.4
(22) Date of filing: 18.01.2013
(51) Int. Cl.: B30B 9/32, B30B 11/02, B30B 11/04, C22B 1/248

(54) **PELLETIZER PRESS METHOD FOR THE TREATMENT OF DUST PARTICLES OF METALS**
GRANULATORPRESSVERFAHREN ZUR VERARBEITUNG VON PARTIKELN AUS METALL
PROCÉDÉ DE PRESSE DE GRANULATEUR POUR LE TRAITEMENT DE PARTICULES DE POUSSIÈRE DE MÉTAUX

(30) Priority: 20.01.2012 DK 201200058
(43) Date of publication of application: 26.11.2014
(73) Proprietor: Kronberg ApS, 7323 Give (DK)
(72) Inventor: CORBETT, Dan Kronberg, DK-7323 Give (DK)
(74) Representative: Plougmann Vingtoft a/s
(86) International application number: PCT/DK2013/000007
(87) International publication number: WO 2013/107454

(56) References cited:
- WO-A1-2007/058071
- DE-C- 341 881
- FR-A1- 2 806 948
- JP-A- 2001 087 978
- JP-A- 2001 300 786
- JP-A- 2005 187 872
- US-A- 3 366 368
- US-A1- 2004 026 812

## Description

### Field of invention

The present invention relates to a method for converting metal waste in the form of zinc containing dust into a recyclable fraction by compressing the zinc containing dust into pellets. The present invention also relates to a pelletizer press configured to carry out the method.

### Prior art

When protecting steel from corrosion it is common practice to hot dip galvanize items in order to form a protective metallic layer on the surface of the steel article. This procedure is limited to articles which can be dipped into the galvanic baths and is, thus, not applicable on large items or items which are already installed in position for use.

Therefore, the process of thermal spray coating has been developed. The method is basically a metallization process, in which the surface of an item is sprayed with liquid metal.

When protecting items of steel from corrosion, the surface is sprayed using 1 or more threads of metal, e.g. pure zinc, or an aluminium-zinc alloy, which are exposed to heat. The heat melts the metal and droplets of molten metal are then accelerated by using a high pressure. The droplets of e.g. zinc, or zinc- aluminium, are sprayed onto the surface of the metal item that needs to be protected from corrosion. The spray of the molten alloys solidifies instantly when hitting the object. In addition, a significant amount of the metal droplets solidifies in the surrounding air or when sprayed towards the item, which results in a certain amount of metal dust, which will settle on a surface below the metallized object.

When steel is protected from corrosion using thermal spray coating with e.g. pure zinc or zinc alloys, e.g. a zinc-aluminium alloy, the dust thus formed will result in losses of significant amounts of pure zinc or zinc alloys.

Until now it has not been possible to recycle the zinc dust, since it ignites or evaporates when added to molten zinc. Therefore, the zinc containing dust has been disposed of by incineration in waste incineration plants. This is, however, an expensive way to dispose of the zinc dust, mainly because the dust is categorized as hazardous waste resulting in a high price for disposal in the waste incineration plant. In addition, a valuable resource of pure zinc or zinc alloys is lost.

In addition, rotary pelletizers are known for pressing different materials into pellets, see e.g. US 2008 0308961 A1, US 3052923 A or US 5071336 A. These rotary pelletizers comprise a rotary circular matrix with a number of holes into which one or more pistons press the materials into pellets. These known rotary pelletizers suffer from the draw back that their capacity for pelletizing is not easily increased since the existing rotary pelletizers are not easily rebuilt. Therefore, capacity may be increased by providing one or more additional rotary pelletizer(s), which will increase costs for expanding the capacity of the rotary pelletizers significantly, since it will require establishing one or more entire production line(s) in parallel to the existing production line.

When pelletizing different materials, and when pelletizing especially zinc containing dust, on rotary pelletizers, it has also been found that dust particles build up on the rotary pelletizer over time. This causes problems, especially since the movements of the pistons are frequently blocked by metal dust, which builds up over time.

Thus, there is a need for developing a method and an apparatus which enables recycling of the hazardous zinc containing dust in a safe way, which renders disposal of the zinc containing dust by incineration superfluous and which reduces or even eliminates the above mentioned disadvantages of the prior art.

Another example of a prior art metal dust press can be seen in FR 2806948 A1, which discloses: a method for recycling metallic powder, said method comprises the following steps:
feeding metallic powder into a chamber having an open end; moving a first plunger towards a base member and hereby compressing the metal powder into a pellet during a pressing process; wherein that said base member is a second plunger being maintained in a fixed position during the pressing process; and moving the second plunger in the direction along the longitudinal axis away from the first plunger after the pressing process, and
moving the first plunger along the longitudinal axis towards the open end of the chamber and hereby moving and extricating the pellet from the chamber in a direction along the longitudinal axis towards open end.

### Summary of the invention

The object of the present invention can be achieved by a method as defined in claim 1 and by a pelletizer press having the features as defined in claim 6. Preferred embodiments are defined in the dependent sub claims and explained in the following description and illustrated in the accompanying drawings.

The method according to the invention is a method for recycling metallic dust, such as zinc dust or zinc-aluminium dust. The method comprises the following steps:
- feeding metallic dust into a chamber having an open end;
- moving a first plunger towards a base member and hereby compressing the metallic dust into a pellet during a pressing process.

Hereby it is achieved that zinc containing dust can be recycled in a in a safe way in the form of pellets. The method according to the invention provides a surprisingly simple way of rendering the zinc dust recyclable and suitable for remelting into new items, e.g. new threads for thermal spray coating or to add to melts of other metals for obtaining zinc containing. The recycling of the zinc dust is possible since the zinc no longer ignites or evaporates when added as pellets to molten zinc or other melts. Thus, disposal by incineration in waste incineration plants is no longer needed, and a significant cost for disposal of zinc dust is no longer needed. In addition, a valuable resource of pure zinc or zinc alloys, e.g. zinc- aluminium, is recovered in a safe and reliable way.

It is preferred that the metallic dust is zinc dust or zinc containing dust.

It is preferred that the method comprises the following steps:
- feeding metallic dust into a basically cylindrical chamber having a longitudinal axis and an open end;
- moving a first plunger along the longitudinal axis towards a base member and hereby compressing the metallic dust into a pellet during a pressing process.

By feeding the metallic dust into a basically cylindrical chamber having a longitudinal axis and an open end it is possible to move a slidable arranged first plunger along the longitudinal axis towards a base member and hereby compressing the metallic dust into a pellet during an efficient and secure pressing process.

It may be an advantage that the base member is a second plunger and that the second plunger is pressed in the direction along the longitudinal axis towards the first plunger or that the second plunger is maintained in a fixed position during the pressing process.

This will secure that zinc containing dust can be compressed in a simple and expedient way.

It is preferred that the method comprises the following steps:
- moving the second plunger in the direction along the longitudinal axis away from the first plunger after the pressing process and
- moving the first plunger along the longitudinal axis towards the open end of the chamber and hereby moving and extricating the pellet from the chamber.

These steps prevents the pellets from getting stuck in the chamber.

It may be beneficial that that the method comprises the step of feeding the metallic dust into the chamber through a pipe, in which pipe a valve is configured to plug the pipe. Hereby it is achieved that the valve can be used to control the amount of metallic dust that is fed into the chamber.

It is preferred that the method comprises the step of dosing a pre-defined quantity/amount of metallic dust into the chamber, which quantity/amount corresponds to a predefined pellet size. Hereby it is achieved that the size of the pellets can be controlled and that the chamber is filled with an appropriate amount of dust in order to achieve the desired pellet size.

It may be an advantage that the method comprises the following steps:
- filing metallic dust into a dust tray that is configured to feed metallic dust into the chamber through a pipe connection;
- opening the pipe connection by opening the valve and hereby feeding a predefined amount of metallic dust into the chamber;
- closing the pipe connection by closing the valve;
- compressing the metallic dust in the chamber into a pellet during a pressing process, in which the first plunger is pressed against a second plunger;
- extricating the pellet from the chamber by moving the second plunger in the direction along the longitudinal axis away from the first plunger after the pressing process and hereafter moving the first plunger along the longitudinal axis towards open end.

This method provides a simple and expedient way of manufacturing pellets from metallic dust.

The object of the present invention can be achieved by a pelletizer press configured to press metallic dust into pellets, which pelletizer press comprises a pressing unit comprising:
- a chamber having an open end
- a first plunger configured to compress metallic dust in the chamber;
- a base member configured to be moved and/or to be maintained in a fixed position relative to the chamber;
- means for feeding a defined amount of metallic dust into the chamber and
- means for pressing the first plunger towards the base member and hereby compressing the metallic dust into a pellet.

The object of the present invention can be achieved by a pelletizer press configured to press metallic dust into pellets, which pelletizer press comprises a pressing unit comprising:
- a cylindrical chamber having a longitudinal axis and an open end
- a first plunger configured to be moved along the longitudinal axis;
- a base member configured to be moved along the longitudinal axis and/or to be maintained in a fixed position relative to the chamber;
- means for feeding a defined amount of metallic dust into the chamber and
- means for pressing the first plunger towards the base member and hereby compressing the metallic dust into a pellet.

Hereby it is achieved that zinc containing dust can be compressed into pellets that can be recycled in a in a safe manner. The pelletizer press according to the invention provides a simple and expedient way of rendering the zinc dust recyclable and suitable for remelting into new items. The pellets can be recycled because the pellets can be added as pellets to molten zinc or other melts without igniting or evaporating. Therefore, disposal by incineration in waste incineration plants is not required. Accordingly, the cost for disposal of zinc dust can be reduced and the zinc or zinc alloys, e.g. zinc- aluminium, can be recovered in a safe and reliable way.

It is preferred that the pelletizer press comprises a plurality of pressing units so that a larger production capacity can be achieved. It is possible to have two, three, four or more pressing units. It is possible to have a pelletizer press that comprises several pressing member each comprising one or more pressing units.

It may be an advantage that the base member is a second plunger and that the second plunger is pressed in the direction along the longitudinal axis towards the first plunger or that the second plunger is maintained in a fixed position during the pressing process. Hereby it is possible to provide optimal pressing conditions and to maintain a high pressure during the pressing process.

It is preferred that the pelletizer press is configured to:
- move the second plunger in the direction along the longitudinal axis away from the first plunger after the pressing process and
- move the first plunger along the longitudinal axis towards the second plunger and hereby moving and extricating the pellet from the chamber.

In this way the pellets can easily be removed from the chamber and hereby the pellets are prevented from getting stuck in the chamber.

It may be an advantage that the pelletizer press comprises a dust tray configured to receive metallic dust and that the dust tray is connected to the chamber through a pipe, in which pipe a valve is arranged and being configured to plug the pipe.

It is preferred that the pelletizer press comprises a valve that is configured to open and close the pipe and hereby dose a pre-defined quantity/amount of metallic dust into the chamber.

It is preferred that the quantity/amount of metallic dust corresponds to a predefined pellet size.

It is preferred that the pelletizer press comprises a control unit configured to carry out a number of successive production sequences each producing a pellet, where each production sequence comprises the following steps:
- activating the valve so that a predefined amount of metallic dust is fed into the chamber between the first plunger and the base member;
- closing the valve so that no further metallic dust is fed into the chamber;
- activating the first plunger and hereby compressing the metallic dust to a pellet;
- moving the base member away from the chamber;
- pushing the pellet out of the chamber by moving the first plunger towards the free end of the chamber and
- moving the first plunger and the base member back to a position so the production sequence can be repeated.

By having such control unit, it is possible to carry out the production process in a controlled manner.

The present invention provides pellets of recovered metal dust obtainable from the method according to the present invention, which renders the metallic dust, the zinc dust, recyclable, since it no longer ignites when added to a metal melt. A pellet produced by using the method according to the invention by using a pelletizer press according to the invention can be recycled in a safe manner. Pellets may be remelted and used in new components. Thus, the cost for disposal of zinc containing dust can be reduced.

In an embodiment of the method the pelletizing press applies a force pressure of at least 30 ton at each plunger

The pelletizer press is controlled by a control unit and the method can be fully automatic.

### Description of the Drawings

The invention will become more fully understood from the de-tailed description given herein below. The accompanying drawings are given by way of illustration only, and thus, they are not limitative of the present invention. In the accompanying drawings:
- Fig. 1: shows a schematic side view of a pelletizer press according to the invention;
- Fig. 2: shows a close-up cross-sectional view of a pressing unit of a pelletizer press according to the invention;
- Fig. 3: shows how zinc dust is fed into a pressing unit and being compressed into a pellet and
- Fig. 4: shows a perspective view of a pelletizer press according to the invention.

### Detailed description of the invention

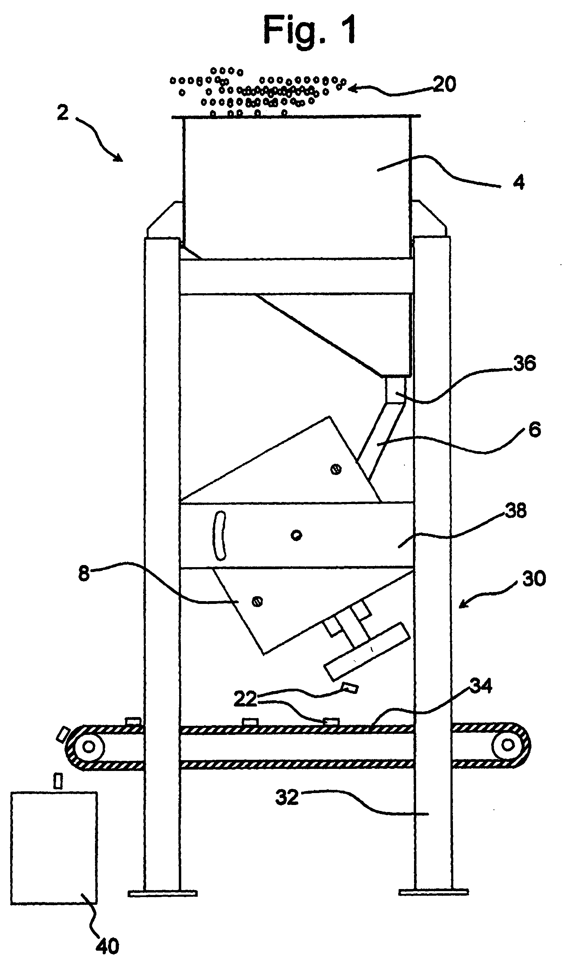

Referring now in detail to the drawings for the purpose of illustrating preferred embodiments of the present invention, a pelletizer press 2 of the present invention is illustrated in Fig. 1.

Fig. 1 is a schematic side view of a pelletizer press 2 according to the invention. The pelletizer press 2 comprises a dust tray 4 configured to receive zinc containing dust. The pelletizer press 2 is intended for recycling of zinc dust or dust containing a zinc alloy, e.g. a zinc-aluminium alloy comprising about 85% zinc and 15% aluminium. The zinc containing dust may be received in containers at a dust recycling station by way of example.

The pelletizer press 2 comprises a pressing member 8 adapted to receive a waste fraction of metallic dust from the dust tray 4 through a pipe 6 that is connected to a pipe 36 of the dust tray 4. The pelletizer press 2 is configured to compress the metallic dust 20 into pellets 22. The pellets 22 are sent downwards to a conveyor belt 34 arranged below the pressing member 8. The conveyor belt 34 is configured to transport the pellets 22 to a container 40 arranged next to the conveyor belt 34.

The pelletizer press 2 comprises a support member 30 provided with support legs 32 adapted to be arranged on a supporting surface. The support member 30 moreover comprises a support plate 38 extending perpendicular to and between adjacent support legs 32. The pressing member 8 is attached to the support plate 38. The pressing member 8 is arranged in an inclined position in order to make it easier for the pellets 22 to be released from the pressing member 8.

The zinc containing dust 20 may be poured or pumped into the dust tray 4. Alternatively, means for attaching the dust tray 4 to a dust transportation system of pipes, tubes or the like may be applied. Such pipe system may be used to transport the dust through pipes to the pelletizer press 2, which presses the zinc containing dust 20 into pellets 22 or tablets 22.

Zinc dust 20 that has been compressed into pellets 22 by using the pelletizer press 2 is capable of being recycled since it will no longer ignite or evaporate when added to molten zinc or optionally to another metal melt.

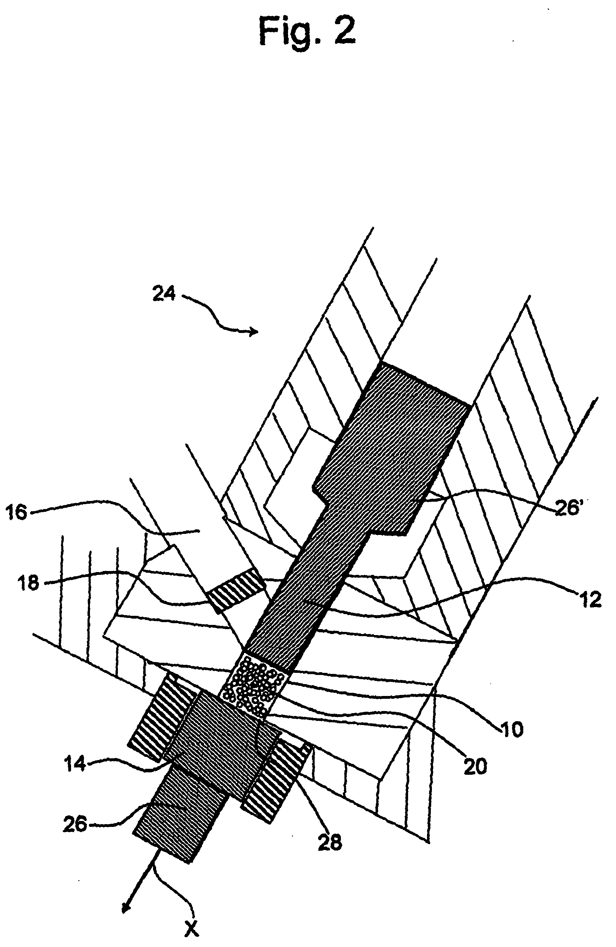

Fig. 2 illustrates a close-up cross-sectional view of a pressing unit 24 of a pelletizer press 2 according to the invention. The pressing unit 24 is arranged in the pressing member 8 as shown in Fig. 1 and it comprises a first plunger 12 slidable arranged in a cylindrical chamber 10. The cylindrical chamber 10 may have a circular, a square, an oval or any other suitable cross-sectional shape. It is important that the first plunger 12 is capable of being displaced along the longitudinal axis X of the cylindrical chamber 10.

The pressing unit 24 comprises a pipe 16 being open on to the chamber 10 However a valve 18 arranged in the pipe 16 makes sure that no further dust 20 can enter the chamber 10 in this situation. The valve, however, is configured to be opened and closed (preferably by using a control unit) in order to deliver a predefined amount of dust into the chamber 10. This may by way of example be done by opening and closing the valve 18 for defined time periods, by using a dosing pump or by controlling the valve on the basis of signals received from one or more sensors (e.g. a flow sensor arranged in the pipe 16).

The pressing unit 24 comprises a base member forme by a second plunger 14 slidable arranged in the pressing unit 24. The second plunger 14 is being pressed towards the first plunger 12. And the first plunger 12 is pressed towards the open end 28 of the chamber 10. This may be done by using electrical actuators (not shown), hydraulic press members or any other suitable actuation means. The second plunger 14 is attached to a shaft 26 extending parallel to the longitudinal axis X of the chamber 10.

The dust 20 enclosed in the volume defined by the chamber 19, the first plunger 12 and the second plunger 14 is being compressed into a pellet.

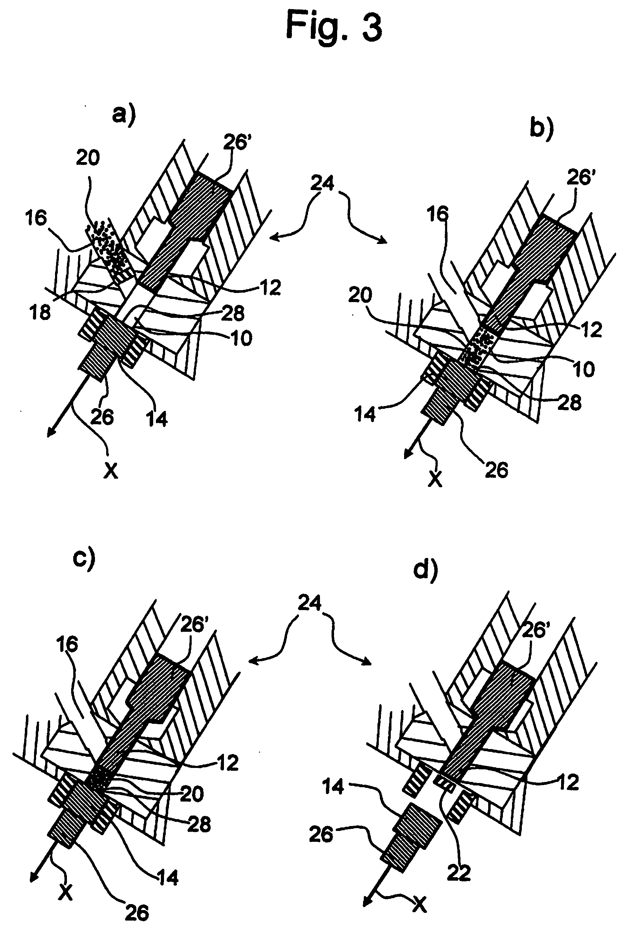

In Fig. 3 a) the valve 18 is closed. Therefore, the zinc containing dust 20 contained in the pipe 16 cannot enter the chamber 10 even though the first plunger 12 is arranged in a position allowing dust 20 to enter the chamber 10. The second plunger 14 bears against the free end 28 of the chamber 10.

In Fig. 3 b) the valve 18 has been opened and the zinc containing dust 20 has entered the chamber 10. The next thing that happens is that the plunger 12 is moved towards the free end 28 of the chamber 10 along the longitudinal axis X of the chamber 10 while the second plunger 14 is either maintained in its position or pressed towards the first plunger 12 like illustrated in Fig. 3 c). In Fig. 3 c) it can be seen that the zinc containing dust 20 has been compressed. However, the zinc containing dust 20 needs to be further compressed in order to make pellets 22 like shown in Fig. 3 d).

It takes a high pressure to produce pellets 22. In one embodiment according to the invention the force applied by the first plunger towards the zinc containing dust 20 may be 30 tons. The required force depends on the contact area of plunger 12.

It is preferred that the second plunger 14 is controlled in a way so that it can resist e din Fig. 3 d) it can match or counterbalance the force from the first plunger 12.

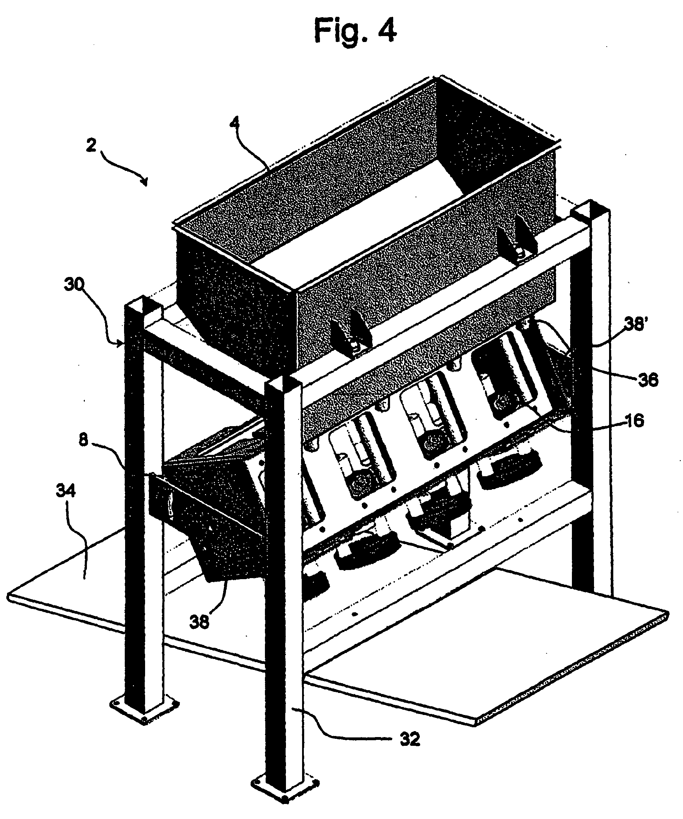

In Fig. 3 d) the first plunger 12 has been moved further towards the free end 28 of the chamber 10 in order to push the pellet 22 into a free position, so that the pellet 22 can fall down to e.g. a conveyer belt like illustrated in Fig. 2 and Fig. 4. The second plunger 14 has been moved further away from the free end of the chamber 10 in order to provide space for the pellet 22 to fall down.

The first plunger 12 and the second plunger 14 are preferably configured to be displaced along the longitudinal axis X of the chamber 10 by using electric actuators, hydraulic actuation means or pneumatic activation means. These means may be connected to the shafts 26, 26' of the plungers 12, 14.

Fig. 4 illustrates a perspective view of a pelletizer press 2 according to the invention. The pelletizer press 2 comprises a dust tray 4 configured to receive the zinc containing dust that has to be recycled. Once the zinc containing dust has been poured, pumped or otherwise filled into the dust tray 4 the zinc containing dust is guided through four pipes 36 attached to the dust tray 4. Each of these pipes 36 are configured to be connected to the pressing member 8 via a pipe 6 (see Fig. 1) which is not shown in Fig. 4. The pipe 6 must be connected to the pipe 16 of the corresponding pressing unit 24 in the pressing member 8.

The pressing member 8 comprises four pressing units 24 like the ones illustrated in Fig. 3. And each pressing unit 24 is capable of producing pellets. It is possible to have further pressing units 24 integrated in the pressing member 8.

The pelletizer press 2 comprises a 30 support member 30 having four parallel extending support legs 32. The pressing member 8 is attached to and arranged in between a first support plate 38 and a second support plate 38'. The support plates 38, 38' extend between two sets of adjacent support legs 32.

A conveyor belt 34 is arranged underneath the pushing member 8. When pellets are produced by the pelletizer press 2, the pellets fall down to the conveyor belt 34. The conveyor belt 34 transports the pellets to a desired location.

The plungers 12, 14 of the invention may be actuated by conventional means, e.g. by one or more primary hydraulic cylinders. A cylinder may be attached to each plunger or alternatively a group, e.g. a row, or the entire array of plungers in the press is actuated by a common hydraulic cylinder. Alternative actuators may e.g. be pneumatically driven cylinders and pistons or other conventional mechanically driven actuators for pelletizer press plungers.

The pelletizer press is controlled by a control unit and the pelletizing process can be fully automatized.

The compressed pellets then fall into a container placed underneath the mould. Alternatively, the pellets fall onto a conveyor belt, which transports the compressed zinc pellets e.g. to a packaging station or a furnace for re-melting, or feeds the pellets directly into a furnace for re-melting.

When the zinc dust is compressed into pellets it is possible to melt the zinc particles contained in the pellets in order to recycle the zinc.

Although the present invention is described for use for working up dust containing zinc or zinc alloys, e.g. a zinc-aluminium alloy, it will be apparent that the method and the apparatus is also useful for working up of dust of other metals used in thermal spray coating. Such metals may e.g. be noble metals such as gold, silver, platinum etc. or their alloys, or other pure metals or alloys such as pure aluminium or aluminium alloys.

### List of reference numerals

- 2: - Pelletizer press
- 4: - Dust tray
- 6: - Tube
- 8: - Pressing member
- 10: - Chamber
- 12: - First plunger
- 14: - Second plunge
- 16: - Pipe
- 18: - Valve
- 20: - Dust
- 22: - Pellet
- 24: - Pressing unit
- 26, 26': - Shaft
- 28: - Open end
- 30: - Support member
- 32: - Support leg
- 34: - Conveyor belt
- 36: - Pipe
- 38, 38': - Support plate
- 40: - Container

## Claims

1. A method for recycling zinc dust or zinc-aluminium dust from a thermal spray coating process, said method comprises the following steps:
feeding zinc dust or zinc-aluminium dust (20) into a chamber (10) of a pressing unit (24) arranged in an inclined pressing member (8), having an open end (28);
moving a first plunger (12) towards a base member (14) and hereby compressing the zinc dust or zinc-aluminium dust (20) into a pellet (22) during a pressing process; wherein that said base member (14) is a second plunger (14) being maintained in a fixed position during the pressing process;
and
moving the second plunger (14) in the direction along the longitudinal axis (X) away from the first plunger (12) after the pressing process, and
moving the first plunger (12) along the longitudinal axis (X) towards the open end (28) of the chamber (10) and hereby moving and extricating the pellet (22) from the chamber (10) in a direction along the longitudinal axis (X) towards open end (28), whereby
the pellet (22) is released from the pressing unit (24) arranged in the inclined pressing member (8).

2. A method according to claim 1, wherein a force of at least 30 ton is applied to the first plunger to compress the zinc containing metallic dust.

3. A method according to claim 1 or 2, wherein the method comprises the step of feeding the zinc containing metallic dust (20) into the chamber (10) through a pipe (16), in which pipe (16) a valve (18) is configured to plug the pipe (16).

4. A method according to one of the preceding claims wherein the method comprises the step of dosing a pre-defined quantity/amount of the zinc containing metallic dust (20) into the chamber (10), which quantity/amount corresponds to a predefined pellet size.

5. A method according to one of the preceding claims 2-3 wherein the method comprises the following steps:
filing zinc containing metallic dust (20) into a dust tray (4) that is configured to feed zinc containing metallic dust (20) into the chamber (10) through a pipe connection (16);
opening the pipe connection by opening the valve (18) and hereby feeding a predefined amount of zinc containing metallic dust (20) into the chamber (10);
closing the pipe connection by closing the valve (18);
compressing the zinc containing metallic dust (20) in the chamber (10) into a pellet (22) during a pressing process, in which the first plunger (12) is pressed against a second plunger (14);
extricating the pellet (22) from the chamber (10) by moving the second plunger (14) in the direction along the longitudinal axis (X) away from the first plunger (12) after the pressing process and hereafter moving the first plunger (12) along the longitudinal axis (X) towards open end (28).

6. A pelletizer press (2) configured to press zinc dust (20) or zinc-aluminium dust from a thermal spray coating process into pellets (22), which pelletizer press (2) comprises a pressing unit (24) arranged in a pressing member (8) and comprising:
a cylindrical chamber (10) having a longitudinal axis (X) and an open end (28)
a first plunger (12) configured to be moved along the longitudinal axis (X);
a base member (14) configured to be moved along the longitudinal axis (X) and to be maintained in a fixed position;
said base member (14) being a second plunger (14),
wherein said second plunger (14) is adapted to be maintained in a fixed position relative to the chamber (10) during the process of pressing the zinc dust (20) or zinc-aluminium dust;
means for feeding a defined amount of the zinc dust (20) or zinc-aluminium dust (20) into the chamber (10) and
means for pressing the first plunger (12) towards the base member (14) and hereby compressing the zinc containing zinc dust (20) or zinc-aluminium dust (20) into a pellet (22);
and
means for extricating the pellet (22) from the chamber (10) by moving the second plunger (14) in the direction along the longitudinal axis (X) away from the first plunger (12) after the pressing process and means for subsequent moving the first plunger (12) along the longitudinal axis (X) towards open end (28), **characterized in that**
the pressing unit (24) is arranged in the pressing member (8) and being arranged with the pressing member (8) in an inclined position in order to make it easier for the pellets to be released from the chamber (10).

7. A pelletizer press (2) according to claim 6, wherein said first plunger comprises a first end extending into the camber (19) being adapted to compress the zinc containing metallic dust, and a second opposite end, wherein the first end has a reduced width or diameter corresponding to substantially half the width or diameter of the second end, whereby the force applied to the zinc containing metallic dust is substantially higher that the force applied to the first plunger.

8. A pelletizer press (2) according to claim 6 or 7, wherein the pressing unit (24) is arranged in a pressing member (8) being arranged in an inclined position in order to make it easier for the pellets to be released from the chamber (10).

9. A pelletizer press (2) according to any of the claims 6-8, wherein said second plunger (14) is adapted to be pressed in the direction along the longitudinal axis (X) towards the first plunger (12) during the process of pressing the zinc containing metallic dust into pellets (22).

10. Use of the pelletizer press according to claim 6, for pressing zinc containing metallic dust into pellets (22).

## Patentansprüche

1. Verfahren zum Recycling von Zinkstaub oder Zink-Aluminium-Staub von einem thermischen Spritzbeschichtungsverfahren, wobei das Verfahren die folgenden Schritte umfasst:
Einspeisen von Zinkstaub oder Zink-Aluminium-Staub (20) in eine Kammer (10) einer in einem geneigten Presselement (8) angeordneten Presseinheit (24) mit einem offenen Ende (28);
Bewegen eines ersten Kolbens (12) zu einem Bodenelement (14), wodurch der Zinkstaub oder der Zink-Aluminium-Staub (20) während eines Pressvorgangs zu einem Pellet verpresst wird; wobei das Bodenelement (14) ein zweiter Kolben (14) ist, der während eines Pressvorgangs in einer fixierten Position gehalten wird;
und
Bewegen des zweiten Kolbens (14) nach dem Pressvorgang in die Richtung entlang der Längsachse (X) weg von dem ersten Kolben (12), und
Bewegen des erstens Kolbens (12) entlang der Längsachse (X) zu dem offenen Ende (28) der Kammer (10) und dadurch Bewegen und Entnehmen des Pellets (22) aus der Kammer (10) in eine Richtung entlang der Längsachse (X) zu dem offenen Ende (28), wobei das Pellet (22) aus der in einem geneigten Presselement (8) angeordneten Presseinheit (24) freigegeben wird.

2. Verfahren nach Anspruch 1, wobei zum Verpressen des zinkhaltigen Metallstaubs eine Kraft von mindestens 30 Tonnen am ersten Kolben angelegt wird.

3. Verfahren nach Anspruch 1 oder 2, wobei das Verfahren den Schritt des Einspeisens des zinkhaltigen Metallstaubs (20) in die Kammer (10) durch ein Rohr (16) umfasst, in welchem Rohr (16) ein Ventil (18) dazu konfiguriert ist, das Rohr (16) zu schließen.

4. Verfahren nach einem der vorhergehenden Ansprüche, wobei das Verfahren den Schritt des Dosierens einer vorbestimmten Menge des zinkhaltigen Metallstaubs (20) in die Kammer (10) umfasst, wobei die Menge einer vorbestimmten Pelletgröße entspricht.

5. Verfahren nach einem der vorhergehenden Ansprüche 2-3, wobei das Verfahren die folgenden Schritte umfasst:
Feilen von zinkhaltigem Metallstaub (20) in eine Staubwanne (4), die zum Einspeisen von zinkhaltigem Staub (20) in die Kammer (10) einer Rohrverbindung (16) konfiguriert ist;
Öffnen der Rohrverbindung durch Öffnen des Ventils (18) und dadurch Einspeisen einer vorbestimmten Menge von zinkhaltigem Metallstaub (20) in die Kammer (10);
Schließen der Rohrverbindung durch Schließen des Ventils (18);
Verpressen des zinkhaltigen Metallstaubs (20) in der Kammer (10) während eines Pressvorgangs in ein Pellet (22), wobei der erste Kolben (12) gegen einen zweiten Kolben (14) gepresst wird;
Entnehmen des Pellets (22) aus der Kammer (10) nach dem Pressvorgang durch Bewegen des zweiten Kolbens (14) in die Richtung entlang der Längsachse (X) weg von dem ersten Kolben (12) und danach Bewegen des ersten Kolbens (12) entlang der Längsachse (X) zu dem offenen Ende (28).

6. Pelletierpresse (2), konfiguriert zum Pressen von Zinkstaub (20) oder Zink-Aluminium-Staub von einem thermischen Spritzbeschichtungsverfahren zu Pellets (22), wobei die Pelletierpresse (2) eine in einem geneigten Presselement (8) angeordnete Presseinheit (24) umfasst, umfassend:
eine zylindrische Kammer (10) mit einer Längsachse (X) und einem offenen Ende (28)
einen ersten Kolben (12), der dazu konfiguriert ist, entlang der Längsachse (X) bewegt zu werden;
ein Bodenelement (14), das dazu konfiguriert ist, entlang der Längsachse (X) bewegt und in einer festen Position gehalten zu werden;
wobei das Bodenelement (14) ein zweiter Kolben (14) ist,
wobei der zweite Kolben (14) dazu beschaffen ist, während des Vorgangs des Verpressens von Zinkstaub (20) oder Zink-Aluminium-Staub in einer festen Position in Bezug zur Kammer (10) gehalten zu werden;
Mittel zum Einspeisen einer bestimmten Menge an Zinkstaub (20) oder Zink-Aluminium-Staub (20) in die Kammer (10) und
Mittel zum Pressen des ersten Kolbens (12) in Richtung des Bodenelements (14) und dadurch Verpressen des zinkhaltigen Zinkstaubs (20) oder Zink-Aluminium-Staubs (20) in ein Pellet (22);
und
Mittel zum Entnehmen des Pellets (22) aus der Kammer (10) nach dem Pressvorgang durch Bewegen des zweiten Kolbens (14) in die Richtung entlang der Längsachse (X) weg von dem ersten Kolben (12) und Mittel zum anschließenden Bewegen des ersten Kolbens (12) entlang der Längsachse (X) zu dem offenen Ende (28),
**dadurch gekennzeichnet, dass**
die Presseinheit (24) in dem Presselement (8) angeordnet und mit dem Presselement (8) in einer geneigten Position angeordnet ist, um das Freigeben der Pellets aus der Kammer (10) zu erleichtern.

7. Pelletierpresse (2) nach Anspruch 6, wobei der erste Kolben ein erstes Ende umfasst, das sich in die Wölbung (19) erstreckt, die zum Verpressen des zinkhaltigen Metallstaubs beschaffen ist, sowie ein zweites gegenüberliegendes Ende, wobei das erste Ende eine kleinere Breite bzw. einen kleineren Durchmesser aufweist, der im Wesentlichen der Hälfte der Breite bzw. des Durchmessers des zweiten Endes entspricht, wobei die an den zinkhaltigen Metallstaub angelegte Kraft wesentlich höher ist als die an den ersten Kolben angelegte Kraft.

8. Pelletierpresse (2) nach Anspruch 6 oder 7, wobei die Presseinheit (24) in einem Presselement (8) angeordnet ist, das in einer geneigten Position angeordnet ist, um das Freigeben der Pellets aus der Kammer (10) zu erleichtern.

9. Pelletierpresse (2) nach einem der Ansprüche 6-8, wobei der zweite Kolben (14) dazu beschaffen ist, während des Vorgangs zum Verpressen von zinkhaltigem Metallstaub in Pellets (22) in die Richtung entlang der Längsachse (X) zum ersten Kolben (12) gepresst zu werden.

10. Verwendung einer Pelletierpresse nach Anspruch 6 zum Verpressen von zinkhaltigem Metallstaub in Pellets (22).

## Revendications

1. Méthode de recyclage de poussière de zinc ou de poussière de zinc-aluminium provenant d'un procédé de revêtement par pulvérisation, ladite méthode comprenant les étapes suivantes :
introduction de poussière de zinc ou de poussière de zinc-aluminium (20) dans une chambre (10) d'une unité de pressage (24) disposée dans un élément de pressage (8) incliné, possédant une extrémité ouverte (28) ;
déplacement d'un premier piston (12) vers un élément de base (14) en compressant ainsi la poussière de zinc ou la poussière de zinc-aluminium (20) afin de former un granulé (22) au cours d'un procédé de pressage, dans lequel ledit élément de base (14) est un deuxième piston (14) qui est maintenu dans une position fixe pendant le procédé de pressage ;
et
déplacement du deuxième piston (14) dans la direction le long de l'axe longitudinal (X) en s'éloignant du premier piston (12) après le procédé de pressage, et
déplacement du premier piston (12) le long de l'axe longitudinal (X) vers l'extrémité ouverte (28) de la chambre (10) en déplaçant et en extrayant ainsi le granulé (22) de la chambre (10) dans une direction le long de l'axe longitudinal (X) vers l'extrémité ouverte (28), si bien que le granulé (22) est libéré de l'unité de pressage (24) disposée dans l'élément de pressage (8) incliné.

2. Méthode selon la revendication 1, dans laquelle une force d'au moins 30 tonnes est appliquée au premier piston pour compresser la poussière métallique contenant du zinc.

3. Méthode selon la revendication 1 ou 2, dans laquelle la méthode comprend l'étape d'introduction de la poussière métallique contenant du zinc (20) dans la chambre (10) au travers d'un tuyau (16), une valve (18) étant intégrée au dit tuyau (16) pour obturer le tuyau (16).

4. Méthode selon l'une quelconque des revendications précédentes, dans laquelle la méthode comprend l'étape de dosage d'une quantité prédéfinie de la poussière métallique contenant du zinc (20) dans la chambre (10), cette quantité correspondant à une taille de granulé prédéfinie.

5. Méthode selon l'une quelconque des revendications 2 à 3, dans laquelle la méthode comprend les étapes suivantes :
remplissage en poussière métallique contenant du zinc (20) d'un bac à poussière (4) qui est configuré pour introduire de la poussière métallique contenant du zinc (20) dans la chambre (10) au travers d'un raccord tubulaire (16) ;
ouverture du raccord tubulaire en ouvrant la valve (18) et en introduisant ainsi une quantité prédéfinie de poussière métallique contenant du zinc (20) dans la chambre (10) ;
fermeture du raccord tubulaire en fermant la valve (18) ;
compression de la poussière métallique contenant du zinc (20) dans la chambre (10) afin de former un granulé (22) au cours d'un procédé de pressage, dans lequel le premier piston (12) est pressé contre un deuxième piston (14) ;
extraction du granulé (22) de la chambre (10) en déplaçant le deuxième piston (14) dans la direction le long de l'axe longitudinal (X) en s'éloignant du premier piston (12) après le procédé de pressage puis déplacement du premier piston (12) le long de l'axe longitudinal (X) vers l'extrémité ouverte (28).

6. Presse de granulation (2) configurée pour presser de la poussière de zinc (20) ou de la poussière de zinc-aluminium provenant d'un procédé de revêtement par pulvérisation afin de former des granulés (22), ladite presse de granulation (2) comprenant une unité de pressage (24) disposée dans un élément de pressage (8) et comprenant :
une chambre cylindrique (10) possédant un axe longitudinal (X) et une extrémité ouverte (28) ;
un premier piston (12) configuré pour être déplacé le long de l'axe longitudinal (X) ;
un élément de base (14) configuré pour être déplacé le long de l'axe longitudinal (X) et pour être maintenu dans une position fixe ;
ledit élément de base (14) étant un deuxième piston (14),
dans lequel ledit deuxième piston (14) est adapté pour être maintenu dans une position fixe par rapport à la chambre (10) pendant le procédé de pressage de la poussière de zinc (20) ou de la poussière de zinc-aluminium ;
un moyen pour introduire une quantité définie de la poussière de zinc (20) ou de la poussière de zinc-aluminium (20) dans la chambre (10) ; et
un moyen pour presser le premier piston (12) vers l'élément de base (14) et ainsi compresser la poussière contenant du zinc (20) ou la poussière de zinc-aluminium (20) afin de former un granulé (22) ;
et
un moyen pour extraire le granulé (22) de la chambre (10) en déplaçant le deuxième piston (14) dans la direction le long de l'axe longitudinal (X) en s'éloignant du premier piston (12) après le procédé de pressage et un moyen pour déplacer ensuite le premier piston (12) le long de l'axe longitudinal (X) vers l'extrémité ouverte (28),
**caractérisée en ce que**
l'unité de pressage (24) est disposée dans l'élément de pressage (8) et est disposée avec l'élément de pressage (8) dans une position inclinée afin de faciliter la libération des granulés hors de la chambre (10).

7. Presse de granulation (2) selon la revendication 6, dans laquelle ledit premier piston comprend une première extrémité qui s'étend dans la chambre (19) étant adaptée pour compresser la poussière métallique contenant du zinc, et une deuxième extrémité opposée, dans laquelle la première extrémité présente une largeur ou un diamètre réduit(e) correspondant à environ la moitié de la largeur ou du diamètre de la deuxième extrémité, si bien que la force appliquée à la poussière métallique contenant du zinc est nettement supérieure à la force appliquée a

8. Presse de granulation (2) selon la revendication 6 ou 7, dans laquelle l'unité de pressage (24) est disposée dans un élément de pressage (8) étant disposé dans une position inclinée afin de faciliter la libération des granulés hors de la chambre (10).

9. Presse de granulation (2) selon l'une quelconque des revendications 6 à 8, dans laquelle ledit deuxième piston (14) est adapté pour être pressé dans la direction le long de l'axe longitudinal (X) vers le premier piston (12) pendant le procédé de pressage de la poussière métallique contenant du zinc afin de former des granulés (22).

10. Utilisation de la presse de granulation selon la revendication 6 pour presser de la poussière métallique contenant du zinc afin de former des granulés (22).
